# EUROPEAN PATENT SPECIFICATION

(11) **EP 2 964 461 B1**
(45) Date of publication and mention of the grant of the patent: **05.09.2018**
(21) Application number: 14712902.7
(22) Date of filing: 05.03.2014
(51) Int. Cl.: B32B 27/30, B32B 37/15, C08F 14/18, H01B 13/06, H01B 3/30, B32B 15/082, H01B 3/44

(54) **ADHESION OF FLUOROPOLYMER TO METAL**
HAFTUNG VON FLUORPOLYMER ZU METAL
ADHÉRENCE DU FLUOROPOLYMÈRE AU MÉTAL

(30) Priority: 05.03.2013 US 201361772746 P
(43) Date of publication of application: 13.01.2016
(73) Proprietor: The Chemours Company FC, LLC, Wilmington DE 19801 (US)
(72) Inventor: ATEN, Ralph, Munson, Chadds Ford, Pennsylvania 19317 (US); BURCH, Heidi, Elizabeth, Bear, Delaware 19701 (US); TURNER, Johnnie, F., Hockessin, Delaware 19707 (US); YOUNG, Robert, Thomas, Newark, Delaware 19702 (US); CAMPBELL, Katie, Lynn, Davisville, West Virginia 26142 (US)
(74) Representative: Heinemann, Monica
(86) International application number: PCT/US2014/020458
(87) International publication number: WO 2014/138140

(56) References cited:
- US-A- 5 547 761
- US-A1- 2003 157 324
- US-A1- 2007 095 473
- DATABASE WPI Week 199233 Thomson Scientific, London, GB; AN 1992-273862 XP002724884, -& JP H04 187432 A (SUMITOMO SHOJI KK) 6 July 1992 (1992-07-06)

## Description

### FIELD OF THE INVENTION

This invention relates to improving the adhesion of fluoropolymers to metal such as in an electrical cable comprising fluoropolymer electrical insulation of an electrical conductor.

### BACKGROUND OF THE INVENTION

U.S. Patent 6,743,508 discloses the effect of increasing adhesion between tetrafluoroethylene/hexafluoropropylene copolymer electrical insulation and core wire (electrical conductor) to enable the copolymer to be extruded at a higher line speed around the core wire without increasing cone breaks. The increased adhesion is obtained by the copolymer containing 15 to 150 polar-functional end groups/10⁶ carbon atoms. The functional end groups are called adhesion terminus. Adhesive strength is measured by the force required to strip (peel away) the insulation from the core wire, and strip forces of 1.3 to 1.8 kg (2.9 to 4 Ib) are reported in the Examples (Table 1) for the end-group functionalized copolymer insulation at the highest line speed of 2800 ft/min.(840 m/min) as compared to 0.8 to 1.1 kg (1.8 to 2.4 Ib) for the comparative insulation compositions. Table 2 reports the adhesive strength comparison between the copolymer insulation having 21 polar-functionalized end groups/10⁶ carbon atoms (Example 7) and the copolymer insulation having zero polar-functionalized end groups (Comparative Example 5), 1.1 (2.4 lb) and 0.5 kg (1.1 lb), respectively.

While improvement in adhesive strength between the fluoropolymer electrical insulation and the electrical conductor may be helpful in providing more economical manufacture of the insulated conductor, there are applications of the insulated conductor requiring greater adhesion of the insulation to the conductor. For example, use of the cable containing the insulated conductor in downhole wells used for the extraction of oil, steam/and or natural gas from the earth exposes the insulated conductor to high temperatures, such as at least 200°C, high pressures from fluids in the well, and pressure fluctuations, which can cause separation of the insulation from the electrical conductor. Such separation diminishes the electrical performance of the cable and exposes the conductor to chemical attack. The problem is how to increase the adhesion between the fluoropolymer electrical insulation and the electrical conductor, to make the cable more resistant to separation of the electrical insulation from the electrical conductor.

### SUMMARY OF THE INVENTION

The present invention involves the discoveries that (a) the formation of a recrystallized region in the fluoropolymer insulation at the interface with the electrical conductor greatly improves adhesion of the insulation to the conductor and (b) in combination with (a) when the fluoropolymer of the fluoropolymer insulation contains side-chain polar functionality (i) the adhesive bond is hydrolytically stable and (ii) the cable comprising this fluoropolymer insulation on an electrical conductor passes the IEEE-1804-2004 test. Without the recrystallization (a), the improvements (b)(i) and (ii) are not obtained. Hydrolytic stability of the adhesive bond means that exposure to boiling water according to this test to be defined later herein has minimal to no effect of the strength of the adhesive bond. In the IEEE test, a length of the insulated conductor is subjected to 0.035 MPa (5 psi) air pressure at one end and the opposite end is submerged in water. The test is passed if the pressurized air in one hour does not travel along the length of the insulation/conductor interface to cause gas bubbles to emanate from the opposite end in water.

One embodiment of the present invention is the laminate comprising a metal substrate and a fluoropolymer layer adhered directly to said metal substrate, said fluoropolymer layer having an in-place recrystallized region at the interface with said metal substrate, wherein said fluoropolymer of said fluoropolymer layer has polar functionality and said polar functionality comprises fluoropolymer side-chain polar functionality, wherein said side-chain polar functionality is selected from the group consisting of amine, amide, carboxyl, hydroxyl, phosphonate, sulfonate, nitrile, boronate and epoxide. The presence of the recrystallized region means that the layer is formed on the metal substrate from molten fluoropolymer that had been cooled to crystallize in contact with the metal substrate. In-place recrystallized region means that this region is in the same location in contact with the metal substrate when recrystallization occurs. Recrystallization occurs by reheating this region above the melting temperature of the fluoropolymer of the fluoropolymer layer, followed by cooling. The carrying out of the crystallization and then recrystallization in place provides the structural effect of increasing the intimacy of the fluoropolymer layer with the metal substrate resulting in increased adhesion between the layer and the substrate.

If a sample of polymer is heated to a temperature above its glass transition temperature and then subjected to a stress, for example processing the polymer by melt draw down extrusion, the polymer molecules will tend to align themselves in the general direction of the stress. If the polymer sample is then cooled below its glass transition temperature while the molecules are under stress, the molecules will become crystallized in an oriented and stressed state. The present inventors surprisingly discovered that the intimacy or adhesion between the fluoropolymer layer and the metal substrate upon recrystallization can be related to the orientation of the fluoropolymer of the in-place recrystallized region at the interface with the metal substrate. The adhesion between the fluoropolymer layer and the metal substrate is increased as a result of the orientation of the fluoropolymer of the in-place recrystallized region being reduced due to recrystallization, and being measurably lower than the orientation of the fluoropolymer of the non-recrystallized region.

The following preferences apply to this embodiment, individually and in combination:
A. The fluoropolymer layer has a non-recrystallized region opposite from the fluoropolymer layer/metal substrate interface. According to this embodiment, the fluoropolymer layer has the recrystallized region at one surface of the layer, i.e. the surface in contact with the metal substrate, and the non-recrystallized region is at the opposite surface of the layer. The presence of the non-recrystallized region at the opposite surface of the layer denotes that this region is not remelted and therefore is not recrystallized. The significance of the opposite surface not remelting is that this surface maintains the shape of the layer during formation of the recrystallized region in the layer at the conductor interface. The remelting leading to recrystallization is confined to the region of the fluoropolymer layer at the layer/metal substrate interface.
B. The laminate embodiment is preferably an electrical cable comprising an electrical conductor as the metal substrate and electrical insulation as the fluoropolymer layer surrounding the conductor and directly adhered to it.
C. The adhesion of the fluoropolymer layer and electrical insulation to the metal substrate and electrical conductor, respectively, is characterized after formation of the in-place recrystallized region by a strip force of at least 8 lb (3.6 kg), or an increase of at least 50%, preferably at least 100% as compared to the strip force existing prior to recrystallization.
D. The fluoropolymer of the fluoropolymer layer and the electrical insulation has polar functionality. This polar functionality comprises side-chain polar functionality. Side-chain polar functionality means that the polar functionality is pendant from the fluoropolymer main chain as a side group, not as an end group of the polymer chain. The polar functionality may also comprise end-group polar functionality in combination with the side-chain polar functionality.
E. The fluoropolymer of said fluoropolymer layer and of the electrical insulation is at least 50 wt% fluorine.
F. The preferred laminate of the present invention is an electrical cable comprising an electrical conductor and fluoropolymer insulation surrounding and directly adhered to said electrical conductor, said fluoropolymer insulation having an in-place recrystallized region at the interface with said conductor and a non-recrystallized region at the insulation surface opposite from said recrystallized region. The above preferences also apply individually and in combination to this preferred embodiment. The electrical conductor is metal.
   Another embodiment of the present invention is the process for forming a laminate comprising an adherent fluoropolymer layer on a metal substrate, comprising applying molten fluoropolymer directly to a surface of said metal substrate to form said layer and recrystallizing said fluoropolymer of said layer at the interface with said metal substrate without changing the shape of said layer. Because the layer is already in place on the metal substrate at the time of recrystallization, the recrystallization is in-place.
   The above-mentioned preferences also apply individually and in combination to the process embodiments of the present invention. Additional preferences individually and in combination are as follows:
G. The recrystallizing is carried out by first cooling the applied molten fluoropolymer layer below the melting temperature of the fluoropolymer. This results in the fluoropolymer of the fluoropolymer layer crystallizing. This is the original (first) crystallization of the fluoropolymer of the fluoropolymer layer. Next, the region of the fluoropolymer layer at the interface with the metal substrate is then reheated to a temperature above said melting temperature, i.e. remelted, followed by cooling. This achieves the recrystallization in this region of the fluoropolymer layer and intimacy of contact described above.
H. The reheating is carried out by heating the metal substrate. This in turn heats the fluoropolymer layer in the region at the layer/metal substrate interface sufficiently to remelt the fluoropolymer in this region, leading to the recrystallization upon cooling. Focusing the heating of fluoropolymer layer at the layer/metal substrate interface enables the region of the fluoropolymer layer at the interface to be remelted without melting the opposite surface of the fluoropolymer layer, thereby enabling the region at the opposite surface to retain its original shape and crystallization, i.e. not be recrystallized.
I. The recrystallizing and heating to accomplish it is carried out quiescently, i.e. without application of external pressure to the laminate, whereby there is no external force on the laminate that would cause it to change shape. This maintenance of shape also means that the original shape, i.e. prior to recrystallizing, does not become deformed by the recrystallizing. The quiescent recrystallization enables the recrystallized region to be free of the residual stress present in the fluoropolymer layer upon cooling from the molten state to crystallization the first time.
J. The preferred process is wherein the laminate formed is electrical cable wherein the metal substrate is an electrical conductor and the fluoropolymer layer is electrical insulation adhered directly to the conductor. The fluoropolymer of the fluoropolymer layer preferably comprises side-chain polar functionality. The adherence of the electrical insulation to the electrical conductor is characterized by the cable passing the IEEE 1018-2004 test. The adhesive bond between the metal substrate such as the electrical cable and the electrical insulation such as the fluoropolymer layer is also preferably hydrolytically stable.

The process of the present invention may also be described as the process for forming a laminate comprising an adherent fluoropolymer layer on a metal substrate, comprising applying molten fluoropolymer directly to a surface of said metal substrate to form a layer on said substrate, cooling said layer to establish its shape and reheating said layer, followed by cooling said layer, the reheating followed by cooling said layer being effective to increase the adhesion of said layer to said metal substrate by at least 50% as compared to the adhesion of said layer to said substrate after cooling said layer to establish its shape, thereby forming said adherent layer on said substrate. The increase adhesion can be measured by increase in strip force, i.e. the highest force required to strip the layer from the metal substrate. The process of the present invention may also be described as a process for forming a laminate comprising an adherent fluoropolymer layer on a metal substrate, comprising i.) applying molten fluoropolymer directly to a surface of said metal substrate to form said fluoropolymer layer, ii.) cooling said fluoropolymer layer to a temperature below the melting temperature of said fluoropolymer, and iii.) recrystallizing fluoropolymer of said fluoropolymer layer at the interface with said metal substrate without changing the shape of said fluoropolymer layer by reheating said fluoropolymer of said fluoropolymer layer at the interface with said metal substrate to a temperature above the melting temperature of said fluoropolymer, followed by cooling said fluoropolymer layer to a temperature below the melting temperature of said fluoropolymer. The preferred laminate is an electrical cable comprising the metal substrate being an electrical conductor and the fluoropolymer layer being the insulation on said conductor. The establishment of the shape of the layer means that at least the exposed surface of the layer has solidified. Preferably, the entire thickness of the layer has solidified. Solidification is accompanied by the crystallization of the fluoropolymer. The preferences A-J disclosed above for the laminate and the process for making the laminate apply individually and in combination to the embodiment of this paragraph.

### BRIEF DESCRIPTION OF THE DRAWINGS

Fig. 1 is a cross-section of one embodiment of laminate of the present invention, namely an electrical cable comprising a layer of fluoropolymer insulation on an electrical conductor, the insulation having a region of recrystallization at the insulation/conductor interface; and
Fig. 2 is a schematic plan view of a wire coating line to produce fluoropolymer insulation on an electrical conductor and then to form fluoropolymer insulation has a recrystallized region at the insulation/conductor interface.

### DETAILED DESCRIPTION OF THE INVENTION

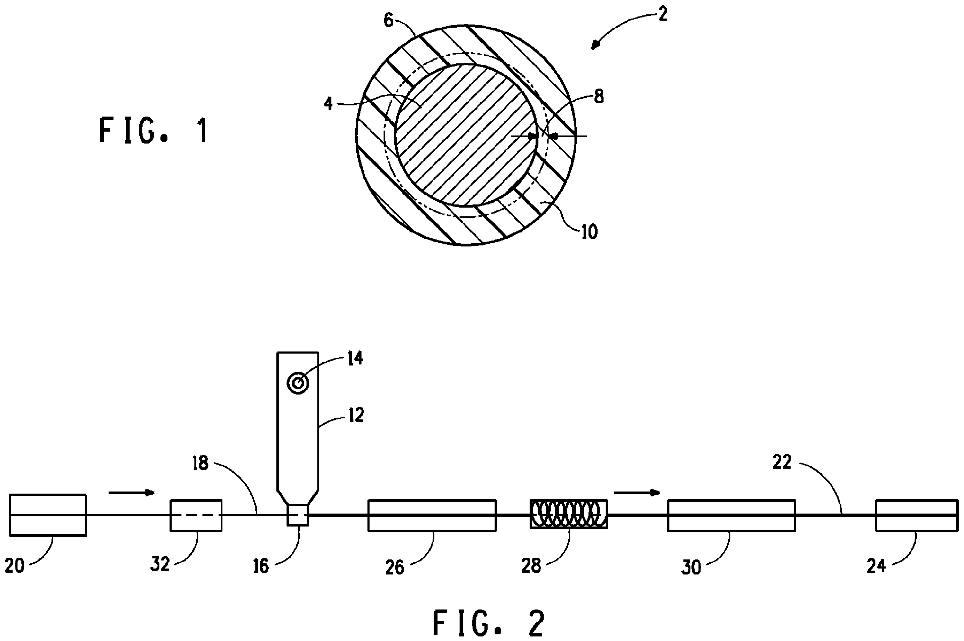

The laminate of Fig. 1 is the preferred laminate of the present invention. This laminate is an electrical cable 2 comprising an electrical conductor 4 having a layer 6 of fluoropolymer surrounding the conductor and forming the electrical insulation for the conductor. The layer 6 is in direct contact with the surface of the conductor 4 and is adhered thereto. A region 8 of the layer 6 at the interface with the surface of the conductor is recrystallized fluoropolymer. The remaining thickness 10 of the layer 6 is crystallized fluoropolymer but not recrystallized. Thus, the outer surface of the layer 6, i.e. the surface opposite from the interface of the layer 6 with the conductor 4, is non-recrystallized fluoropolymer.

An embodiment for obtaining the crystalline variations of regions 8 and 10 within the layer 6 of fluoropolymer is illustrated in Fig. 2. Fig. 2 shows an extruder 12 having a hopper 14 at the back end for feeding fluoropolymer pellets to the extruder for melting and extrusion. The extruder is equipped with a cross-head 16 through which an electrical conductor 18 is passed from left to right as shown in Fig. 2. The conductor 18 can be the same as conductor 4 of Fig. 1. The conductor 18 is supplied from a reel 20 and is wound up as electrical cable 22 by reel 24. Electrical cable 22 can be the same as cable 2 of Fig. 1. As the conductor 18 passes through the cross-head 16, the conductor becomes coated with a layer of fluoropolymer which can be the same as layer 6 of Fig. 1 to form the insulation on the conductor 1. This coating step is conventional, preferably involving melting the fluoropolymer in the extruder 12, with the extruder then forcing the molten fluoropolymer into the cross-head16 to surround the conductor 18 with molten fluoropolymer. The extruder next forces the molten fluoropolymer through an extrusion die (not shown) in the form of a tube (not shown). The tube of molten fluoropolymer is vacuum drawn down into a conical shape into contact with the conductor 18 to form the insulation of the electrical cable 22 (and the fluoropolymer layer 6 on conductor 4). In Fig. 2, the electrical cable 22 is depicted as thicker than the conductor 18, reflecting the added thickness of the cable insulation. The draw-down of the molten tube of fluoropolymer onto the conductor 18 is preferably assisted by a vacuum applied via the conductor passage through the cross-head into the interior of the molten tube. The wind-up speed of the cable 22 onto reel 24 determines the line speed. This line speed is faster that the speed of extrusion of the molten tube of fluoropolymer, resulting in the cone wall thinning out until it comes into contact with the conductor 18.

Immediately downstream from cross-head 16, the cable 22 passes through a cooling bath 26, which is typically a trough containing tap water. This cooling causes the molten layer of fluoropolymer to crystallize. In a conventional conductor coating operation, the coated conductor would next be wound up on a reel. According to the present invention, however, after cooling in bath 26, the layer of fluoropolymer is next subjected to reheating to form an in-place recrystallized region in the fluoropolymer layer at the interface with the conductor, which can be the same as the region 8 in Fig. 1. This reheating is carried out in a manner that melts the fluoropolymer layer at the interface with the conductor and confines this melting to the interface, whereby the remaining thickness of the layer is not remelted and is therefore not recrystallized In the embodiment of Fig. 2, this reheating is accomplished by passing the cable through an induction coil 28 through which high frequency electrical signals are passed, resulting in the heating the surface of the conductor 18 to a high enough temperature that the layer of fluoropolymer in the region at the interface with the heated conductor remelts, without remelting the entire layer. This reheating is induction heating, and the confinement of this remelting to the insulation region at the conductor interface is controlled by the frequency of the electrical signals passing through the coil 28 and the residence time of the cable 22 within the coil. The cable 22 next passes through a second cooling bath 30, which causes the remelted fluoropolymer to solidify from the molten state and in the course of this solidification, crystallize. This crystallization is a recrystallization, the first crystallization having occurred during the cooling of the cable 22 immediately after extrusion coating operation. The cooling baths 26 and 30 are cooling zones, wherein the coolant can be other than water, e.g. air cooling.

As is apparent from the crystallization of the fluoropolymer and subsequent recrystallization of the region of the layer at the interface with the conductor 18, this recrystallization is in-place. The positioning of the fluoropolymer layer on the conductor 18 is already established when the cable is exposed to the reheating step such as the induction heating from coil 28 described above. The formation of the recrystallized region is carried out by the reheating and subsequent cooling without any change in the position of the fluoropolymer layer.

The remelting of just the region of the fluoropolymer layer at the conductor/fluoropolymer layer interface has the benefit of the shape of the fluoropolymer layer not being changed by the recrystallization (remelting and cooling) step. Thus, the concentricity of the conductor 18 within the cable 22, and of conductor 4 within the fluoropolymer layer 6 is unchanged. Likewise the thickness of the fluoropolymer layer is unchanged. These dimensional stabilities are in the practical sense. In this regard, it is preferred that if there is any change in layer thickness, such change is no greater than 0.5 mil (0.013 mm) from the original layer thickness. The non-recrystallized region at least at the surface of the fluoropolymer layer opposite from the layer/conductor interface provides this shape stability.

The in-line process of extrusion and recrystallization shown in Fig. 2 can be modified to be done in separate production lines, i.e. in one production line, the extrusion is carried out and the cable is wound up on a reel without recrystallization taking place, and this reel is the feed to a second production line wherein the recrystallization is carried out, and the resultant cable is wound up on a different reel. This separation of production lines enables the line speeds in each line to be independently varied to provide the desired results

Preferably, the recrystallization is carried out under quiescent conditions, i.e. there is no external force urging the fluoropolymer layer against the conductor 18. Neither the induction coil 28 nor the second cooling bath 30 applies any external deforming force to the exterior surface of the cable 22. The vacuum draw-down of the molten tube of fluoropolymer down onto the conductor 18 at the cross-head 16 has already dissipated as an external pressure when the molten fluoropolymer contacts the surface of the conductor upstream from the first cooling bath 26.

One benefit of the quiescent recrystallization or quiescent formation of the recrystallized region in the fluoropolymer layer at the layer/conductor interface is the maintenance of the original shape of the fluoropolymer layer. Another benefit is that the adhesion of the fluoropolymer layer to the conductor is improved. If as been found that when recrystallization is non-quiescent, i.e. a deforming force is applied to the insulation during remelting, the force required to peel (separate) a layer of fluoropolymer from its substrate greatly diminishes. The test comparing strip forces with and without the application of external force is described under Comparative Example 2. The strip force is the highest force required to separate the fluoropolymer film from the copper sheet upon pulling of the extended portions of the film and copper sheet apart at an angle of 180°. This test result obtained with a variety of fluoropolymers indicates that the quiescent crystallization (melting and cooling) of the fluoropolymer layer in contact with the metal substrate provides a better adhesion result than when the adhesion is carried out non-quiescently. This improved adhesion is manifested by a strip force at least 50%, preferably at least 100%, greater when the adhesive bond is formed under quiescent crystallization as compared to non-quiescent crystallization. It is thus apparent that the quiescent crystallization, carried out as recrystallization in the present invention, provides an improved intimacy in contact between the fluoropolymer layer and the metal substrate, resulting in improved adhesion between the fluoropolymer layer and the metal substrate.

The same % improvement is obtained for strip force with respect to separating the fluoropolymer insulation from its conductor. Instead of strip forces of 1.8 kg (4 Ib) and less when the fluoropolymer insulation is not in-place recrystallized, strip forces of at least 3.6 kg (8 lb), preferably at least 5.5 kg (12 Ib) and more preferably, at least 7.3 kg (16 Ib) are obtained by practice of the recrystallization step of the present invention.

In the embodiment of Fig. 2, the conductor 18 is preferably heated by passing the conductor through a heater 32 upstream from the cross-head. This contributes to the initial adhesion of the fluoropolymer layer to the conductor 18. The temperature to which the conductor will be heated will depend on the particular fluoropolymer constituting the fluoropolymer layer and the line speed of the extrusion coating operation. Preferably the conductor will be heated to at least 75°C up to a temperature of 25°C less than the melting temperature of the fluoropolymer. If the conductor temperature exceeds the melting temperature at the time of initial contact of the fluoropolymer layer with the conductor 18, i.e.at the time of melt draw-down, the adhesion of the fluoropolymer layer is adversely affected. Examination of the resultant cable upon cooling after melt draw down formation of the fluoropolymer layer on the conductor reveals areas of separation between layer and conductor, possibly resulting from off-gassing by the layer when first contacting the conductor. Such separation does not occur in the recrystallization step of the present invention. This preheating of the metal substrate can be used to form laminates in general of the present invention.

The cable 2 of Fig. 1 and the cable 22 of Fig. 2 each comprise an electrical conductor and a fluoropolymer layer providing electrical insulation surrounding the conductor. The cable can comprise additional components. A metal shield can be applied to the opposite surface, e.g. the exposed surface of layer 6 of Fig.1, whereby the cable 2 becomes a coaxial cable. Alternatively, the cable can comprise a plurality of fluoropolymer-insulated conductors, e.g. a plurality of cables 2 or 22 of Figs. 1 and 2, respectively. The cable may also comprise protective armoring, such as metal jacketing. The presence of these additional components and others well known to those skilled in the art will depend on the particular application of the cable.

The laminate of the present invention can have shapes that are different from fluoropolymer-insulated conductor and similar adhesion results will be obtained by their preparation in accordance with the process of the present invention involving in-place, preferably quiescent recrystallization, of the fluoropolymer layer.

The metal substrate can be any metal. Preferred metal substrates when an electrical conductor are copper, silver and aluminum. For non-electrical current carrying applications, the metal substrate can be these metals or other metals such as steel, iron, or tin. Each of the foregoing-mentioned metals can be used as alloys. When the metal substrate is an electrical conductor, such conductor can comprise a single stand of wire or a strand of multiple wires associated together such as by twisting or braiding. A single strand wire is preferred. The wire constituting the electrical conductor is preferably circular in cross-section. Preferred wire diameters are from 0.2 to 5.2 mm, represented as wire gauges (AWG) of 32 to 4.

The thickness of the fluoropolymer layer will depend on the application of the laminate and the identity of the fluoropolymer in the fluoropolymer layer. The minimum thickness is that which permits the crystallization difference to be obtained, from recrystallization at the substrate/layer interface to no recrystallization at the opposite surface of the layer. Preferably, the fluoropolymer layer is at least 5 mils (0.13 mm) thick, more preferably at least 8 mils (0.2 mm) thick and most preferably at least 10 mils (0.25 mm) thick, whether the layer is insulation on a conductor or is a different laminate. Typically, there will not be a need for a layer thickness greater than 100 mils (2.5 mm).

With respect to the fluoropolymers used to form the fluoropolymer layer in the process of the preset invention to form the laminates of the present invention, including the cables of the present invention, such fluoropolymers preferably have the following characteristics: the fluoropolymer is at least 50 wt% fluorine, the fluoropolymer is melt fabricable, and the fluoropolymer crystallizes upon cooling from the molten state.

The crystallinity of the fluoropolymer enabling it to crystallize upon cooling from the molten state also enables recrystallization to occur in the practice of the recrystallizing step of the present invention. The presence of crystallinity and recrystallization in the fluoropolymer is determined by X-ray crystallography as described under the Examples. The presence of recrystallization involves comparison of crystal size or % crystallinity of the recrystallized region of the fluoropolymer layer with the crystal size and/or % crystallinity of the fluoropolymer in the same region prior to recrystallization, i.e. the original crystallinity of the fluoropolymer in this region.

By melt-fabricable is meant that the fluoropolymer of the fluoropolymer layer is both melt flowable by such common molding techniques as extrusion and injection molding and the molded articles of the fluoropolymer exhibit toughness so as make them useful.

By melt flowable is meant that the fluoropolymer has flowability in the molten state. This distinguishes from polytetrafluoroethylene (PTFE), including modified PTFE, that is well known not to flow in the molten state. The non-melt flowability of PTFE is further described in U.S. Patent 7,763,680. The melt flowability of the fluoropolymer used in the present invention is preferably characterized by melt flow rate (MFR) determined in accordance with ASTM D 1238, preferably using the more convenient Procedure B (automated method). In accordance with ASTM D 1238, molten polymer is forced by a known weight through a specific size orifice of a plastometer of specified dimensions for a period of time and the amount of polymer flowing through the orifice is collected and weighed. The weighed amount of fluoropolymer collected is reported as melt flow rate (MFR) in g/10 min. The conditions of temperature of the melt and weight forcing the molten polymer through the orifice are standard for different fluoropolymers and specified in ASTM sections directed to such fluoropolymers. Preferably, the fluoropolymers used in the present invention have an MFR of at least 1 g/10 min more preferably at least 4 g/10 min, even more preferably, at least 7 g/10 min. Preferably the MFR of the fluoropolymer is no greater than 50 g/10 min. The higher the MFR of the fluoropolymer, the greater is its melt flowability, i.e. reduced viscosity, which leads to increased production rates in the melt fabrication of the fluoropolymer layers formed in the present invention. The difference between low MFR in the 50 g/10 min range and high MFR in this range is that high MFR fluoropolymer has a lower molecular weight than low MFR fluoropolymer for the same fluoropolymer composition. Toughness of the fluoropolymer diminishes as MFR increases. Low MFR fluoropolymer is preferred when the metal substrate is flexible as in the case of electrical conductor and the cable is subjected to flexing in use. The maximum MFR for the fluoropolymer of the fluoropolymer layer in electrical cable is preferably no greater than 30 g/10 min, more preferably no greater than 25 g/10 min, even more preferably no greater than 20 g/10 min, and most preferably no greater than 16 g/10 min. These maximum MFRs apply to each minimum MFR specified above. When the metal substrate is rigid, high MFR fluoropolymers forming the fluoropolymer layer can be used when fluoropolymer toughness is less critical.

The aspect of toughness distinguishes from PTFE micropowder, which is a low molecular weight PTFE. PTFE micropowder has melt flowability but lacks toughness. The melt flowability of PTFE micropowder arises from its low molecular weight as compared to PTFE, which has such a high molecular weight that PTFE is non-melt flowable. The melt flowability of PTFE micropowder is at the expense of toughness. Articles fabricated from molten PTFE micropowder are extremely brittle. They cannot be formed by compression molding into tensile test specimens, because the molded test specimens have insufficient integrity to be handled for tensile testing. Extruded filaments of PTFE micropowder are so brittle that they break upon the slightest flexing. In contrast, the melt fabricability of the fluoropolymers used in the present invention is characterized by the fluoropolymer exhibiting an MIT flex life of at least 1000 cycles of folding through an angle of 135° as determined in accordance with ASTM D 2176 using an 8 mil (0.21 mm) thick compression molded film of the fluoropolymer.

The fluoropolymer used in the present invention is a fluoroplastic, not a fluoroelastomer.

Examples of fluoropolymers useful in the present invention include the perfluoropolymers. Perfluoropolymer means the monovalent atoms bonded to the carbon atoms making up the fluoropolymer main chain (backbone) are all fluorine atoms. Other atoms may be present in the fluoropolymer end groups, i.e. the groups that terminate the fluoropolymer main chain.

Examples of perfluoropolymers include the copolymers of tetrafluoroethylene (TFE) with one or more polymerizable perfluorinated comonomers, such as perfluoroolefin having 3 to 8 carbon atoms, such as hexafluoropropylene (HFP), and/or perfluoro(alkyl vinyl ether) (PAVE) in which the linear or branched alkyl group contains 1 to 5 carbon atoms. Preferred PAVE monomers include perfluoro(methyl vinyl ether) (PMVE), perfluoro(ethyl vinyl ether) (PEVE), perfluoro(propyl vinyl ether) (PPVE), and perfluoro(butyl vinyl ether) (PBVE). The copolymer can be made using several PAVE monomers, such as the TFE/perfluoro(methyl vinyl ether)/perfluoro(propyl vinyl ether) copolymer, sometimes called MFA by the manufacturer. The preferred perfluoropolymers are TFE/HFP copolymer in which the HFP content is about 5-17 wt%, more preferably TFE/HFP/PAVE such as PEVE or PPVE, wherein the HFP content is about 5-17 wt%, more preferably 9-15 wt%, and the PAVE content, preferably PEVE, is about 0.2 to 4 wt%, the balance being TFE, to total 100 wt% for the copolymer. The TFE/HFP copolymers, whether or not a third comonomer is present, are commonly known as FEP. TFE/PAVE copolymers, generally known as PFA, have at least about 1 wt% PAVE, including when the PAVE is PPVE or PEVE, and will typically contain about 2-15 wt% PAVE. When PAVE includes PMVE, the composition is about 0.5-13 wt% perfluoro(methyl vinyl ether) and about 0.5 to 3 wt% PPVE, the remainder to total 100 wt% being TFE, and as stated above, may be referred to as MFA. Preferred perfluoropolymers are PFA and FEP.

Other fluoropolymers that can be used in the present invention are the hydrogen-containing fluoropolymers wherein the fluorine content is at least 50 wt% as mentioned above. Preferably the fluorine content of the fluoropolymer is at least 70 wt%. Examples of hydrogen-containing fluoropolymers are those having repeat -CH₂- and -CF₂- units in the fluoropolymer main chain and preferably have repeat -CH₂-CH₂- and - CF₂-CF₂- units in the polymer chain. Examples of such fluoropolymers include THV copolymer, which is a copolymer of TFE, HFP and vinylidene fluoride, and ETFE copolymer, which is a copolymer of ethylene and TFE. Typically, ETFE copolymer contains units derived from polymerization of at least one other monomer, i.e. a modifying termonomer, such as perfluorobutyl ethylene (CH₂=CH(C₄F₉) or PFBE), hexafluoroisobutylene (CH₂=C(CF₃)₂) or HFIB), perfluoro(alkyl vinyl ether) (PAVE), or hexafluoropropylene (HFP). This third monomer can be present in the amount of 0.1 to 10 mole% based on the total moles of ethylene and TFE. The molar ratio of ethylene to TFE is preferably in the range of about 30:70 to 70:30, preferably about 35:65 to 65:35, and more preferably about 40:60 to 60:40. ETFE copolymer is described in U.S. Patent Nos. 3,624,250, 4,123,602, 4,513,129, and 4,677,175.

The standard conditions for determining MFR in accordance with ASTM D 1238 for the most common fluoropolymers are specified in ASTM D 2116 for FEP (372°C melt temperature and 5 kg weight), ASTM D 3307 for PFA (372°C melt temperature and 5 kg weight), and ASTM D 3159 for ETFE copolymer (297°C melt temperature and 5 kg weight). The MFR's mentioned above are applicable to each of the fluoropolymer compositions mentioned above.

Fluoropolymers are understood to be non-polar. This non-polarity is manifested by chemical inertness and lubricity, i.e. the tendency not to adhere to other surfaces. These fluoropolymers also exhibit high surface tension to droplets of water and low dielectric constant. Some degree of polarity can be imparted to the fluoropolymer by the presence of polar functional end groups on the fluoropolymer main chain and/or polar functional groups pendant from the main chain of the fluoropolymer i.e. side-chain polar functionality. The fluoropolymers used in the present invention possess side-chain polar functionality.

The polarity of the functional group can also be explained molecular terms. A bond between two unlike atoms is polar, however the molecule or molecular group as a whole may be nonpolar if the structure is symmetrical. A molecular group is polar if it is structurally asymmetrical, that is the molecule is composed of two different elements, or the atoms are unevenly arranged around a central atom. HF is polar since two elements are joined by a covalent bond, but the electrons are not shared equally. H₂ is nonpolar and symmetrical, since both atoms of the molecule are of the same element, so there is equal sharing of the electron cloud. Polar groups can also be made of more than two elements and more than three atoms. In all cases, the degree (or amount) of polarity depends on the position of the atoms which are unevenly arranged around a central atom. Thus the carboxyl group, -COOH is polar because the carbonyl oxygen and the hydroxyl group are asymmetrically arranged around the carbon. Perfluoroalkyls, CF₃(CF₂)nCF₃, are nonpolar because the fluorines are arranged symmetrically around the carbons.

The fluoropolymers used in the present invention can have polar-functionalized end groups, which typically arise from the polymerization reaction, either from the initiator, chain transfer agent, and/or ammonium buffer, if any, used. These end groups are typically polar in functionality in contrast to the non-polar end groups resulting from the most common end group stabilizing chemical treatments: humid heat treatment yielding - CF₂H end groups and fluorination yielding -CF₃ end groups. The polar functional end groups are characterized by one or more of being ionic or capable of hydrogen bonding, and therefore are unstable, either chemically or thermally or both. Examples of polar functional end groups are the carboxylic acid (-COOH) and derivatives thereof, e.g. ester (-COCH₃), amide (-CONH₂) and acid fluoride (-COF), alcohol (-CH₂OH), and vinyl (-CF=CF₂) end groups, -COOH being the most common polar functional end group resulting from polymerization forming the fluoropolymer.

The fluoropolymer, as-polymerized, can contain at least 200 polar functional end groups per 10⁶ carbon atoms, and may have a greater number of functional end groups depending on the molecular weight of the fluoropolymer. The lower the molecular weight, the greater the number of functionalized end groups arising from the polymerization process. FEP for example generally has at least 400 polar functionalized end groups per 10⁶ carbon atoms as-polymerized. FEP as commercially available is end-group stabilized such as by the humid heat treatment or fluorination mentioned above. Stabilization of fluoropolymer end groups by exposing the fluoropolymer to fluorine typically converts substantially all as-polymerized polar functional end groups to the -CF₃ stable (non-polar) end group. U.S. Patent 4,626,587 (Morgan and Sloan) discloses the effect of fluorine treatment of FEP. Table III shows the fluorination results for three FEP polymers, each having a large -CF=CF₂ end group population, and one having a large -COOH end group population, wherein the -CF=CF₂ end group population is greatly reduced and 51 -COOH end groups (Monomer) are reduced to 7 per 10⁶ carbon atoms U.S. Patent 4,743,658 (Imbalzano and Kerbow) discloses the fluorination treatment of PFA having at least 80 (total) per 10⁶ carbon atoms of the following end groups: -COF, -CH₂OH, and -CONH₂, which are reduced to no more than 6 of these end groups (total) per 10⁶ carbon atoms. U.S. Patent 3,085,083 (Schreyer) discloses the humid heat treatment of FEP to convert unstable end groups to the stable -CF₂H end group. Reaction of FEP with ammonia is also disclosed in Schreyer Table 1 resulting in the virtual disappearance of -COOH end groups. The fluoropolymers, especially the perfluoropolymers that are end group stabilized are essentially free of polar functionality, especially end group polar functionality, i.e. there a no greater than 30 polar-functional end groups, preferably no greater than 20 such end groups, more preferably no greater than 10 such end groups, all per 10⁶ carbon atoms.

While fluoropolymers used in the present invention all exhibit improved adhesion as measured by increased strip force as a result of the recrystallization described above, the fluoropolymers that possess side-chain polar functionality exhibit further improvements. By side-chain polar functionality is meant that the functional groups are pendant from the main chain (backbone) of the fluoropolymer. This pendency can be obtained by copolymerization to form the fluoropolymer, i.e. the polar functionality is part of the monomer used in the copolymerization process. Incorporation of this monomer into the fluoropolymer results in the polar functionalized groups being pendant from the repeat unit derived from the monomer, whereby this functionality becomes pendant from the fluoropolymer main chain. Alternatively, this pendency can be obtained by grafting of a polar functionalized compound onto the main chain of the fluoropolymer.

The further improvements provided by fluoropolymers possessing side-chain polar functionality include improved hydrolytic stability of the adhesive bond of the fluoropolymer layer to the metal substrate and to cable passing the IEEE 1804-2004 test. This is especially important in applications of the fluoropolymer layer/metal substrate laminate, such as electrical cable comprising fluoropolymer-insulated electrical conductor, that involve exposure to fluids at high temperature and pressure. The improvement in strength of the adhesive bond is diminished when the laminate is exposed to boiling water for 2 hr as further described under the EXAMPLES, when the fluoropolymer possesses only end group polar functionality, while the adhesive bond is essentially unchanged when the fluoropolymer possesses side-chain polar functionality. The more stable the adhesive bond, the greater the hydrolytic stability. Preferably the strip force after the exposure to boiling water immersion is at least 90%, preferably at least 95%, of the strip force prior to such immersion for laminates of the present invention. The fluoropolymer layers wherein the fluoropolymer possesses side-chain polar functionality also pass the IEEE 1804-2004 test.

Examples of fluoropolymers possessing side-chain polar functionality by copolymerization include copolymers of tetrafluoroethylene with at least the monomer providing the repeat units providing the side-chain functionality (functionalized monomer). Such monomer can include that which has at least one functional group and a polymerizable carbon-carbon double bond, such as disclosed in US 2010/0036074. The polymerizable carbon-carbon double bond functions to allow repeating units arising from the functional group monomer to be incorporated into the fluoropolymer carbon-carbon chain backbone arising from polymerized units of tetrafluoroethylene. The fluoropolymer can contain units derived from additional, non-functionalized monomers such as hexafluoropropylene, and PAVE defined above, preferably wherein the PAVE is PEVE, PPVE, or the combination of PMVE and PPVE as described above. Such fluoropolymers are copolymerized from perfluoromonomers, except for the functionalized monomer as further described below.

The functionalized monomer can comprise the following elements: (a) all monovalent atoms are hydrogen, (b) carbon, hydrogen and oxygen, or (c) the elements of (b) and in addition, the elements selected from the group consisting of nitrogen, phosphorus, sulfur and boron. In addition to the polymerizable carbon-carbon double bond of any of the monomers of (a)-(c), the monomer can contain and impart the following side-chain functional group to the fluoropolymer main chain at least one selected from the group consisting of amine, amide, carboxyl, hydroxyl, phosphonate, sulfonate, nitrile, boronate and epoxide. The functionalized monomer can also be referred to by the structure CH₂=CHX, wherein X is the moiety that contains the polar functionality and that becomes the side-chain polar functionality upon copolymerization.

In addition to the polymerizable carbon-to-carbon double bond, in another embodiment, the functionalized monomer preferably contains a carboxyl group (-C(=O)O-), more preferably, a dicarboxylic acid group such as a dicarboxylic acid anhydride group (-C(=O)OC(=O)-), a dicarboxylic acid group capable of forming a cyclic dicarboxylic acid anhydride, a 1,2- or 1,3-dicarboxylic acid group, or C₄ to C₁₀ dicarboxylic acids and dicarboxylic acid anhydrides. The carboxyl group includes, for example: maleic anhydride, maleic acid, fumaric acid, itaconic anhydride, itaconic acid, citraconic anhydride, citraconic acid, mesaconic acid, 5-norbornene-2,3-dicarboxylic anhydride and 5-norbornene-2,3-dicarboxylic acid.

In addition to the polymerizable carbon-carbon double bond , the functionalized monomer can contain the following:
an amine as the functional group, examples of which include aminoethyl acrylate, dimethylaminoethyl methacrylate, dimethylaminoethyl acrylate, aminoethyl vinyl ether, dimethylaminoethyl vinyl ether and vinyl aminoacetate;
an amide group, examples of which include N-methyl-N-vinyl acetamide,
   acrylamide and N-vinylformamide;
an hydroxyl group, examples include 2-hydroxyethyl vinyl ether and omega-hydroxybutyl vinyl ether;
a phosphonate group, an example of which is diethylvinyl phosphonate;
a sulfonate group, an example of which is ammonium vinyl sulfonate;
a nitrile group, an example of which is acrylonitrile;
a boronate group, Examples of which include vinyl boronic acid dibutyl ester, 4-vinyl phenyl boronic acid and 4-bentenyl boronic acid; or
an epoxide group, an example of which is allyl glycidyl ether (AGE).

The copolymer of perfluoromonomer(s) and functionalized monomer preferably comprises only a small amount of the functionalized monomer, for example about 0.001 to about 1 weight percent, based on the weight of the copolymer. Other preferred composition ranges are as follows: about 0.001 to about 0.5 weight percent, about 0.001 to about 0.3 weight percent, about 0.001 to about 0.1 weight percent, or about 0.001 to about 0.01 weight percent, all based on the sum of the weights arising from the functionalized monomer, tetrafluoroethylene, and any other perfluoromonomer present in the copolymer.

The functionalized monomer may have a perfluorinated polymerizable carbon-to -carbon double bond and may be represented by the structure CF₂=CFX, wherein X has the same meaning as above. Examples of such monomers include the known fluorovinyl ethers, such as CF₂=CFOCF₂CF(CF₃)CF₂CF₂SO₂F and derivatives such as wherein the - SO₂F group is converted to -SO₂OH, -COOH, -COOCH₃, -CH₂OH, or - OPO₂(OH)₂. The amount of such monomer copolymerized with other perfluoromonomer, notably TFE, will generally be from 1 to 50 wt% of the fluorovinyl ether based on the sum of the weights of the fluorovinyl ether and the perfluoromonomer copolymerized therewith. Examples of fluorovinyl ethers are disclosed in U.S. Patents 4,982,009, 5,310,838, 4,138,426, and in European patent publications 0 728 776 and 0 626 424.

The side-chain polar functionality can also be obtained by grafting of a compound containing a carbon-to-carbon double bond and polar functionality onto the fluoropolymer main chain, such as disclosed in WO 96/03448 (Kerbow). Examples of such compounds include the carboxylic, sulfonic and phosphonic acids, preferably the diacids, esters and anhydrides. Examples of such compounds include diethyl maleate, maleic anhydride, halogen-substituted anhydrides such as dichloromaleic anhydride, and difluoromaleic anhydride, itaconic anhydride, citraconic anhydride, and glutaconic anhydride. The amount of grafting compound grafted onto the fluoropolymer main chain is preferably from 0.01 to 15 wt%, based on the sum of the weights of the grafting compound and fluoropolymer, more preferably 0.02 to 5 wt%, and most preferably, 0.02 to 1 wt%.

The polar functionality preferably contained by the fluoropolymer, any of those mentioned above, is preferably thermally reactive, whereby the remelting of the fluoropolymer layer, such as the fluoropolymer electrical insulation in the region at the metal (conductor) interface, so as to be effective to provide the increase in adhesion observed as a result of the in-place recrystallization. This reactivity preferably arises from steric straining present in the polar functional groups providing the polar functionality to the fluoropolymer. Steric straining denotes chemical bonds that break upon heating so as to relieve the steric strain. The steric strain arises from the arrangement of atoms contained in the polar functional group, wherein the arrangement stresses chemical bonds between atoms, such as can be caused by one atom being too large for the allotted space in the molecule.

The preferred polar functionality is that which contains reactive functionality arising from steric staining or simply, that which contains steric straining. An example of steric straining is the -O- moiety present in the polar functional group as part of a cyclic structure such as epoxide or dicarboxylic anhydride polar functionality, both containing the ≡C-O-C≡ structure, wherein the carbon atoms are pendant directly or indirectly from the fluoropolymer main chain . The chemical bonding of the oxygen atom to its neighboring atoms, such as carbon atoms, breaks, leaving these neighboring atoms each free to react/bond with the metal substrate. Since the neighboring atoms are pendant from the fluoropolymer main chain, each polar functional group provides a multiplicity (at least two) of attachment sites for the metal substrate. For ease of preparation, the sterically strained polar functional groups are preferably present as side-chain polar functionality of the fluoropolymer.

Thus, the fluoropolymer of the fluoropolymer layer directly adhered to the metal substrate, whether it be the fluoropolymer insulation surrounding and directly adhered to a metal conductor of an electrical cable or other form of laminate, can have many characteristics, which can be summarized as follows:
minimum fluorine content,
perfluoropolymer
crystalline,
melt fabricabilty,
essentially free of polar functional end groups,
contain polar functional side-chain groups,
side-chain polar functionality includes carboxyl, amine, amide, hydroxyl, phosphonate, sulfonate, nitrile, epoxide and/or boronate,
copolymer comprising TFE and a polar functionalized monomer,
the polar functionalized monomer has the structure CR₂=CRX, wherein R is entirely H or F and X is a moiety containing the polar functionality and providing the side-chain polar functionality of the fluoropolymer,
the fluoropolymer has polar functionality grafted to it, providing side-chain polar functionality, or
the grafted side-chain functionality includes acids, ester and anhydrides of carboxylic, sulfonic, and phosphonic acids.

Details of these characteristics are as described above. These characteristics can be present individually or in combination when not contradictory.

### EXAMPLES

The strength of the adhesive bond between fluoropolymer layer and metal substrate is the strip force, which is the force required to strip the fluoropolymer layer from the metal substrate. The strip force is measured by pulling away the layer from the substrate, using a tensile tester, such as an INSTRON® tensile testing machine, at a rate of 5.1 cm/min and recording the breakaway force causing the separation of the layer from the metal substrate. The breakway force provided by the tensile tester is the highest force registered by the tensile tester during separation of the fluoropolymer layer and metal substrate. The configuration of the laminate will determine how the strip force is obtained.

Strip force electrical cable: The test involves pulling an extended length of electrical conductor out of its fluoropolymer insulation. In the electrical cable, the fluoropolymer layer is the insulation, and the metal substrate is the electrical conductor. The strip force is measured in accordance with the procedure disclosed in U.S. patent 7,638,709 at col. 10, I.11-32, except that the length of the insulated cable is 2.5 cm. This procedure is used to obtain the strip force values disclosed herein for electrical cables in the disclosure of the present invention and the % increase in strip force arising from in-place recrystallization.

Strip force flat laminate: The procedure for measuring the strip force required to separate a flat fluoropolymer layer from a flat metal substrate is disclosed in Comparative Example 2.

The determination of recrystallization is carried out by wide angle X-ray analysis (WAXS) to determine apparent crystallite size and/or crystallinity index (% crystallization) on fluoropolymer at the interface of the metal substrate or electrical conductor as the case may be. The determination can be done before and after recrystallization so the crystal structures can be compared. A change in crystal structure indicating recrystallization has occurred, confirms the remelting of the fluoropolymer layer at the metal substrate surface, which is directly observable by the deformability of the layer at the time of remelting. Fluoropolymer melting temperature is determined in accordance with ASTM D 3418.

Hydrolytic stability of the adhesive bond between fluoropolymer and metal substrate is determined by immersing the laminate in boiling water for 2 hrs. The adhesive bond is determined by strip force before and after the exposure to boiling water immersion.

### Comparative Example 1

In this Comparative Example, various fluoropolymers are extruded in melt draw-down process onto copper wire and the resultant cable is cooled whereby the fluoropolymer of the resultant insulation crystallizes. The copper wire is 16 AWG (1.3 mm) solid copper. The thickness of the fluoropolymer insulation is 14 mil (0.35 mm).

**Table 1**

| Fluoropolymer No. | Basic Fluoropolymer Identity | Strip Force | |
|---|---|---|---|
| | | lb | kg |
| 1 | ETFE | 3.2 | 1.5 |
| 2 | ETFE MA grafted | 4.1 | 1.9 |
| 3 | PFA with end group functionality | 3.9 | 1.8 |
| 4 | PFA fluorinated | 4.1 | 1.9 |
| 5 | PFA/PTFE micropowder blend | 3.8 | 1.7 |
| 6 | PFA with side-chain functionality | 4.1 | 1.9 |
| 7 | FEP blend with side-chain funct. | 3.8 | 1.7 |
| 8 | FEP fluorinated | 2.7 | 1.2 |

Details of fluoropolymers 1-8 are as follows:
Fluoropolymer 1 is a copolymer of 18 wt% ethylene, 79 wt% TFE, and 3 wt% % of modifying termonomer, having an MFR of 6 g/10 min, melting temperature of 255-280°C. Extrusion conditions: die tip temperature 340°C, draw-down ratio (DDR) 53:1, cone length 1.5 in (3.8 cm), and wire preheat temperature 350°F (177°C).
Fluoropolymer 2 is a copolymer of 18 wt% ethylene, 79 wt% TFE and 3 wt% modifying termonomer and 0.01wt% maleic anhydride grafted to the ETFE, an MFR of 7 g/10 min and melting temperature of 265-275°C. Extrusion conditions: die tip temperature 340°C, draw-down ratio (DDR) 25:1, cone length1 in (2.5 cm), and wire preheat temperature 250°F (120°C)
Fluoropolymers 1 and 2 are believed to have non-polar end groups.
Fluoropolymer 3 is a copolymer of 96 wt% TFE and 4 wt% PPVE, having a MFR of 14 g/10 min and melting temperature of 302-310°C and about 400 polar functional end groups/10⁶ carbon atoms that are primarily -COOH. Extrusion conditions: die tip temperature 389°C, draw-down ratio (DDR) 50:1, cone length ¾ in (1.9 cm), and wire preheat temperature 350°F (177°C).
Fluoropolymer 4 is a copolymer of 96 wt% TFE and 4 wt% PPVE, having an MFR of 12-15 g/10 min, melting temperature of 302-310°C, and less than 10 polar functional groups/10⁶ carbon atoms as a result of fluorination of the as-polymerized PFA. Extrusion conditions: die tip temperature 389°C, draw-down ratio (DDR) 50:1, cone length 1.25 in (3.2 cm), and wire preheat temperature 350°F (177°C).
Fluoropolymer 5 is a blend of (a) 75 wt% TFE/PPVE copolymer, which is 96 wt% TFE and 4 wt% PPVE and has an MFR of 5.2 g/10 min and about 300 polar-functional end groups per 10⁶ carbon atoms that are primarily -COOH, with (b) 25 w% PTFE micropowder having an MFR of 17.9 g/10 min at 372°C using a 5 kg wt. The blend has an MFR of 7 g/10 min. Extrusion conditions: die tip temperature 389°C, draw-down ratio (DDR) 50:1, cone length 3/4 in (1.9 cm), and wire preheat temperature 350°F (177°C).
Fluoropolymer 6 is a copolymer of 96.47 wt% TFE, 3.5 wt% of PPVE, and 0.03 wt% of allyl glycidyl ether (AGE).having an MFR of 5.4 g/10 min at 372°C and using a 5 kg weight and a melting temperature of 302-310°C. Extrusion conditions: die tip temperature 389°C, draw-down ratio (DDR) 50:1, cone length 1 in (2.5 cm), and wire preheat temperature 350°F (177°C).
Fluoropolymer 7 is a blend of (a) 25 wt% copolymer of 88.47 wt% TFE, 11.5 wt% PPVE, and 0.03 wt% AGE, having an MFR of 5.4 g/10 min at 372°C and using a 5 kg weight, and a melt temperature of 255-265°C, with (b) 75 wt% copolymer of 88.3 wt% TFE, 10.5 wt% HFP, and 1.2 wt% of PEVE, having an MFR of 30 g/10 min and melting temperature of 260°C. Copolymer (b) is fluorinated to have less than 30 polar functional end groups, primarily -COOH. The blend has an MFR of 24 g/10 min at 372°C and using a 5 kg weight. Extrusion conditions: die tip temperature 389°C, draw-down ratio (DDR) 75:1, cone length 3/4 in (1.9 cm), and wire preheat temperature 250°F (120°C).
Fluoropolymer 8 is copolymer (b) used in Fluoropolymer 7. Extrusion conditions: die tip temperature 389°C, draw-down ratio (DDR) 75:1, cone length 3/4 in (1.9 cm), and wire preheat temperature 250°F (120°C).

The extrusion conditions for each fluoropolymer are chosen to provide a smooth surface, free of melt fracture, on the interior of the extruded tube being drawn down onto the wire, so as to provide complete and uninterrupted contact between the molten fluoropolymer and the wire.

Fluoropolymers 3, and 5 are notable in possessing end group polar functionality. Fluoropolymers 1, 2, 4 and 8 are notable in being essentially free of polar functionality. Fluoropolymers 2, 6, and 7 are notable in possessing side-chain polar functionality.

### Comparative Example 2

In this Example, strip force results are obtained on flat laminates prepared with and without quiescent recrystallization.

Sheets 6 in x 6 in (15.2 x 15.2 cm) and 20 mil (0.5 mm) thick of various fluoropolymers are compression molded using a heated press (343°C) at 2000 lb (4.4 kg) until the fluoroplymer powder charge flows for about 2 min. The force of the press is then increased to 7000 lb (15.4 kg) for 6 min. The resultant sheets_of fluoropolymer are allowed to cool in the press and then are removed.

The sheet of each fluoropolymer is laminated to a sheet of copper, with a release sheet being placed under a 2.54 cm end of the fluoropolymer sheet to prevent this length from adhering to the copper. This lamination is carried out by placing the fluoropolymer sheet on top of the copper sheet in a press that is then heated to 343°C. For the quiescent lamination, the hot press platen is lowered into contact with the fluoropolymer layer, but without applying a force (pressure) to the layer. As the layer melts, the platen is lowered to maintain contact but not force on the molten layer. After 6 min, the platen is raised and the laminate allowed to cool before removal from the press. The same procedure is followed for the non-quiescent lamination, except that the press applies a force of 7000 lb (15.5 kg) for 6 min against the sheet of molten fluoropolymer on top of the sheet of copper.

Each laminate is cut into 1 in (2.54 cm) wide strips for tensile testing. The 1 in (2.54 cm) free end of the fluoropolymer layer can be bend at a right angle to the laminate, and the corresponding underlying free end of the copper sheet can be bent at a right angle in the opposite direction. These free ends of the fluoropolymer layer and copper sheet can be gripped by the tensile tester, whereby these free ends are at an angle of 180° to one another. The tensile tester strips the fluoropolymer layer from the copper sheet and the highest force (the strip force) is recorded. The pull-apart rate of the tensile tester jaws is 10 in/min (25.4 cm/min). The adhesion results are reported in Table 2.

**Table 2**

| Fluoropolymer | Strip Force- lb (kg) | |
|---|---|---|
| | Quiescent Lamination | Non-quiescent Lamination |
| 3 | 10.4 (4.7) | 6.4 (2.9) |
| 9 | 12.9 (5.9) | 1.7 (0.8) |

Note: Fluoropolymer 9 is the (a) polymer of fluoropolymer 7. Surprisingly, the layer of fluoropolymer adheres better to the metal substrate when the lamination is quiescent than when the molten layer is pressed against the metal substrate by the press platen as in this Example. The improvement in strip force is at least 50%.

### Example 1(Embodiment of the invention for fluoropolymer 7, Comparative Example for fluoropolymers 8 and 10)

Lengths of several of the fluoropolymer insulated wire obtained in Example 1 are subjected to induction heating, one length at a time. After the 10 sec. exposure to induction heating within the induction coil, the test length of each fluoropolymer-insulated wire is allowed to cool and is then tested for the strength of the adhesive bond between the insulation and the wire. The induction heating in this Example is static in that the length of fluoropolymer-insulated wire is stationary during the induction heating. The 10 sec exposure is the amount of time that the electrical circuit powering the induction coil is turned on.

After exposure to 45% and 55 % power for the induction coil, the strip forces for the insulated wire used in this Example are essentially unchanged from the less than 4 lb (1.8 kg) strip forces obtained with no induction heating. After exposure to 70% power, a sharp increase in strip force is observed for the insulated wires tested. The wires insulated with fluoropolymers 7 and 8 exhibit strip forces of 27 lb (12.2 kg) and 24 lb (10.9 kg), respectively, an improvement of at least 100%.

A similar result is obtained for another fluoropolymer insulation, wherein the fluoropolymer (fluoropolymer 10) is a copolymer of 88.4 wt% TFE, 10.4 wt% HFP, and 1.2 wt% PEVE having a MFR of 18 g/10 min, a melt temperature of 264°C, and fluorinated to have about 50 polar functional end groups, primarily -COOH. After exposure to 70% power of the induction coil, the strip force increases to 25 lb (11.4 kg) as compared to only 3 lb (1.4 kg) when no induction heating is used or induction heating is at only 45% and 55% power.

An IR camera focused on the exposed surface of the fluoropolymer insulation of each test length of insulated wire indicates the surface temperature of the insulation is 167°C at 70% power, which is well below the melting temperature of the fluoropolymers tested in this Example. This indicates that the surface of the fluoropolymer insulation is not melted by tis exposure to induction heating, whereby the original crystallization for extrusion coating onto the wire and cooling is retained. The region of the insulation at the interface with the wire is known to have melted upon exposure at 70% power by contacting the exposed surface of the insulation and noting deformation of the insulation, indicating melting of underlying fluoropolymer insulation. This deformability of the exposed surface of the insulation is confirmation that underlying fluoropolymer of the insulation has remelted to become melt flowable. It is known that this melting is at the wire interface region, because the wire is the heat source created by the induction coil. Thus, the region of the insulation at the wire interface recrystallizes upon cooling of the effective induction-heated test lengths of fluoropolymer insulated wire. These recrystallizations are carried out quiescently.

The adhesion between the fluoropolymer insulation and the wire after exposure to 70% power of the induction heating coil (and cooling) is stronger than the tensile strength of the insulation, which exhibits a yield strength of about 17 lb (7.7 kg) for each of the test samples.

### Example 2(Comparative Example)

In this experiment, the recrystallization step is carried out dynamically in line with the extrusion coating step as shown in Fig. 2. The extrusion conditions are the same as in Comparative Example 1 for the particular fluoropolymers 1, 3, and 8 tested in this Example.

Strip forces are determined on cables insulated with fluoropolymers 1, 3, and 8, and in the experiments of this Example, the exposure is to induction heating is controlled by exposed surface temperature of the fluoropolymer insulation, instead of % power of the induction coil. The exposed surface temperature is determined using an IR camera. The induction coil is rectangular in cross-section, measuring 7/16 in (1.1 cm) x 7/8 in (2.2 cm). The strip force when no induction heating is used in less than 4 lb (1.8 kg) for each cable. This is the strip force existing prior to recrystallization. At the surface temperature of 180°C, the strip force (after cooling) for the insulations of fluoropolymers 1 and 8 increases to at least 10 Ib (4.5 k), while the fluoropolymer insulation of fluoropolymer 3 exhibits virtually no change from the original 4 Ib (1.8 kg) strip force. At the surface temperature of 220°C, however, the strip force for the insulation of fluoropolymer 3 increases to 13.5 Ib (6.1 g). At this same temperature, the strip forces for the insulations of fluoropolymers 1 and 8 increase to 17 lb (7.7 kg). The surface temperatures of 180°C and 220°C are known to remelt the region of insulation at the wire interface because these insulations are deformable at the exit end of the induction coil, indicating melting of underlying fluoropolymer insulation. Since the induction coil heats the wire, which in turn, heats the insulation, then it is known that the remelting (recrystallization) occurs at the wire interface. These recrystallizations are accompanied by an increase in strip force of at least 100% as compared to the strip force existing prior to recrystallization. The remelting of the insulation of fluoropolymer 3 is confirmed by change in crystallography in the region of the insulation at the wire interface. Specifically, before remelting, the fluoropolymer exhibits an average crystal size (ACS) of 191 Ǻ, and after remelting, the ACS is 221 Ǻ. These recrystallizations are carried out quiescently.

### Example 3(Embodiment of the invention for fluoropolymers 2 and 6, Comparative Example for fluoropolymers 3 and 4)

Hydrolytic stability of the adhesive bond is tested for several of the insulated wires (cables) of the Comparative Example 1 after quiescent remelting of the insulation region at the wire interface according to Example 2. For the cable using fluoropolymer 4, the strip force decreases by 50% from the immersion in boiling water The decrease in strip force for the fluoropolymer insulation using fluoropolymer 3 is 20%. The insulations using the fluoropolymers 2 and 6 result in a decrease in strip force of no more than 2%. Fluoropolymers 2 and 6 both possess side-chain polar functionality, whereas fluoropolymers 3 and 4 do not. Strip force is measured by the procedure of strip force electrical cable described above.

### Example 4(Embodiment)

The insulations of fluoropolymers 2 and 6 after remelting of the insulation region at the wire interface according to Example 2 also pass the IEEE 1018-2004 test. Without the remelting, these insulations (cable) fail this test, i.e. gas bubbles emerge from the submerged end of the cable in less than one hour of testing.

### Example 5(Comparative Example)

In this experiment, the fluoropolymer insulation comprised of fluoropolymer 3 in Example 2, 1) as extruded prior to induction heating and 2) after exposure to induction heating (measured insulation surface temperature of 220°C) was examined using 2D wide angle X-ray scattering for changes in fluoropolymer chain orientation with induction heating. Fluoropolymer sections were taken from the air and conductor interfaces of the cable via microtoming for each sample set and orientation angle measured. Before induction heating, the orientation angle of Fluoropolymer 3 as-extruded insulation was found to be 70° at both the air and conductor interfaces of the cable, indicating a low degree of polymer chain orientation induced via the extrusion process. The orientation angle of the as-extruded sample can be shifted based on specific extrusion conditions but consistently results in an equal degree of low orientation at both air and conductor interfaces of the cable. Induction heat treatment greatly impacts the orientation most noticeably at the conductor interface, with a 2D WAXS pattern showing essentially no scattering, indicating random chain orientation. This loss in orientation at the interface to the conductor due to the recrystallization of the material and relaxation of stresses resulted in the strip force increasing from less than 4 Ib (1.8 kg) for the as-extruded sample to 13.5 Ib (6.1 kg) due to the induction heating. A loss in orientation to a lesser degree was also observed at the outer insulation surface as well after heating, with a measured orientation angle of 90°.

## Claims

1. A laminate comprising a metal substrate and a fluoropolymer layer adhered directly to said metal substrate, said fluoropolymer layer having an in-place recrystallized region at the interface with said metal substrate, wherein said fluoropolymer of said fluoropolymer layer has polar functionality and said polar functionality comprises fluoropolymer side-chain polar functionality, wherein said side-chain polar functionality is selected from the group consisting of amine, amide, carboxyl, hydroxyl, phosphonate, sulfonate, nitrile, boronate and epoxide.

2. The laminate of claim 1 wherein said fluoropolymer layer has a non-recrystallized region opposite from said interface, preferably wherein the orientation of the fluoropolymer of said in-place recrystallized region is lower than the orientation of the fluoropolymer of said non-recrystallized region.

3. The laminate of claim 1 included in an electrical cable wherein said metal substrate is an electrical conductor and said fluoropolymer layer is the electrical insulation surrounding said conductor, preferably wherein the adhesion of said electrical insulation to said electrical conductor is **characterized by** an increase in strip force of at least 50% as compared to the strip force existing prior to recrystallization.

4. The laminate of claim 1 wherein said polar functionality further comprises fluoropolymer end group polar functionality.

5. The laminate of claim 1 wherein said fluoropolymer of said fluoropolymer layer is at least 50 wt% fluorine.

6. An electrical cable comprising a metal conductor and fluoropolymer insulation surrounding and directly adhered to said metal conductor, said fluoropolymer insulation having a recrystallized region at the interface with said conductor and a non-recrystallized region opposite from said recrystallized region, wherein said fluoropolymer of said fluoropolymer layer has polar functionality and said polar functionality comprises fluoropolymer side-chain polar functionality, wherein said side-chain polar functionality is selected from the group consisting of amine, amide, carboxyl, hydroxyl, phosphonate, sulfonate, nitrile, boronate and epoxide.

7. The electrical cable of claim 6 wherein the orientation of the fluoropolymer of said recrystallized region is lower than the orientation of the fluoropolymer of said non-recrystallized region.

8. A process for forming a laminate comprising an adherent fluoropolymer layer on a metal substrate, comprising applying molten fluoropolymer directly to a surface of said metal substrate to form said fluoropolymer layer and recrystallizing fluoropolymer of said fluoropolymer layer at the interface with said metal substrate without changing the shape of said fluoropolymer layer, wherein said fluoropolymer of said fluoropolymer layer has polar functionality and said polar functionality comprises fluoropolymer side-chain polar functionality, which is selected from the group consisting of amine, amide, carboxyl, hydroxyl, phosphonate, sulfonate, nitrile, boronate and epoxide.

9. The process of claim 8 wherein said recrystallizing is carried out by cooling said fluoropolymer layer below the melting temperature of said fluoropolymer of said fluoropolymer layer and reheating said fluoropolymer of said fluoropolymer layer at the interface with said metal substrate to a temperature above said melting temperature of said fluoropolymer, followed by cooling said fluoropolymer layer to a temperature below said melting temperature of said fluoropolymer, preferably wherein said reheating is carried out by heating said metal substrate.

10. The process of claim 8 wherein said recrystallizing is effective to reduce the orientation of the fluoropolymer of said fluoropolymer layer at the interface with said metal substrate, preferably wherein the orientation of the fluoropolymer of said fluoropolymer layer at the interface with said metal substrate is lower than the orientation of the fluoropolymer of said fluoropolymer layer at the air interface.

11. The process of claim 8 wherein said recrystallizing is carried out under quiescent conditions.

12. The process of claim 8 wherein said metal substrate is an electrical conductor and said fluoropolymer layer is electrical insulation for said conductor, preferably wherein the adhesion of said electrical insulation to said electrical conductor is **characterized by** an increase in strip force of at least 50% as compared to the strip force existing prior to said recrystallizing.

13. The process of claim 8, wherein the adherence of said electrical insulation to said electrical conductor is **characterized by** said laminate passing the IEEE 1018-2004 test.

14. The process of claim 8 wherein said fluoropolymer of said fluoropolymer layer is at least 50 wt% fluorine.

## Patentansprüche

1. Laminat umfassend ein Metallsubstrat und eine Fluorpolymerschicht, die direkt an dem Metallsubstrat haftet, wobei die Fluorpolymerschicht eine an Ort und Stelle umkristallisierte Region an der Grenzfläche mit dem Metallsubstrat aufweist, wobei das Fluorpolymer der Fluorpolymerschicht polare Funktionalität aufweist und die polare Funktionalität polare Fluorpolymer-Seitenkettenfunktionalität aufweist, wobei die polare Seitenkettenfunktionalität aus der Gruppe ausgewählt ist bestehend aus Amin, Amid, Carboxyl, Hydroxyl, Phosphonat, Sulfonat, Nitril, Boronat und Epoxid.

2. Laminat nach Anspruch 1, wobei die Fluorpolymerschicht eine nicht umkristallisierte Region der Grenzfläche gegenüber aufweist, wobei bevorzugt die Orientierung des Fluorpolymers in der an Ort und Stelle umkristallisierten Region geringer ist als die Orientierung des Fluorpolymers der nicht umkristallisierten Region.

3. Laminat nach Anspruch 1, das in ein elektrisches Kabel integriert ist, wobei das Metallsubstrat ein elektrischer Leiter ist und die Fluorpolymerschicht die elektrische Isolierung ist, die den Leiter umgibt, wobei bevorzugt die Haftung der elektrischen Isolierung an dem elektrischen Leiter durch eine Erhöhung der Abziehkraft um mindestens 50 % im Vergleich mit der Abziehkraft, die vor der Umkristallisierung vorliegt, gekennzeichnet ist.

4. Laminat nach Anspruch 1, wobei die polare Funktionalität ferner polare Fluorpolymer-Endgruppenfunktionalität aufweist.

5. Laminat nach Anspruch 1, wobei das Fluorpolymer der Fluorpolymerschicht zu mindestens 50 Gew.-% aus Fluor besteht.

6. Elektrisches Kabel umfassend einen Metallleiter und eine Fluorpolymerisolierung, die den Metallleiter umgibt und direkt daran haftet, wobei die Fluorpolymerisolierung eine umkristallisierte Region an der Grenzfläche mit dem Leiter und eine nicht umkristallisierte Region der umkristallisierten Region gegenüber aufweist, wobei das Fluorpolymer der Fluorpolymerschicht polare Funktionalität aufweist und die polare Funktionalität polare Fluorpolymer-Seitenkettenfunktionalität aufweist, wobei die polare Seitenkettenfunktionalität aus der Gruppe ausgewählt ist bestehend aus Amin, Amid, Carboxyl, Hydroxyl, Phosphonat, Sulfonat, Nitril, Boronat und Epoxid.

7. Elektrisches Kabel nach Anspruch 6, wobei die Orientierung des Fluorpolymers der umkristallisierten Region geringer als die Orientierung des Fluorpolymers der nicht umkristallisierten Region ist.

8. Verfahren zum Bilden eines Laminats umfassend eine haftende Fluorpolymerschicht auf einem Metallsubstrat, umfassend das Auftragen von geschmolzenem Fluorpolymer direkt auf eine Oberfläche des Metallsubstrats, um die Fluorpolymerschicht zu bilden, und das Umkristallisieren von Fluorpolymer der Fluorpolymerschicht an der Grenzfläche mit dem Metallsubstrat ohne Änderung der Gestalt der Fluorpolymerschicht, wobei das Fluorpolymer der Fluorpolymerschicht polare Funktionalität aufweist und die polare Funktionalität polare Fluorpolymer-Seitenkettenfunktionalität umfasst, die aus der Gruppe ausgewählt ist bestehend aus Amin, Amid, Carboxyl, Hydroxyl, Phosphonat, Sulfonat, Nitril, Boronat und Epoxid.

9. Verfahren nach Anspruch 8, wobei das Umkristallisieren durch Kühlen der Fluorpolymerschicht auf unter die Schmelztemperatur des Fluorpolymers der Fluorpolymerschicht und erneutes Erhitzen des Fluorpolymers der Fluorpolymerschicht an der Grenzfläche mit dem Metallsubstrat auf eine Temperatur über der Schmelztemperatur des Fluorpolymers, gefolgt von Kühlen der Fluorpolymerschicht auf eine Temperatur unter der Schmelztemperatur des Fluorpolymers ausgeführt wird, wobei bevorzugt das erneute Erhitzen durch Erhitzen des Metallsubstrats ausgeführt wird.

10. Verfahren nach Anspruch 8, wobei das Umkristallisieren wirksam ist, die Orientierung des Fluorpolymers der Fluorpolymerschicht an der Grenzfläche mit dem Metallsubstrat zu reduzieren, wobei bevorzugt die Orientierung des Fluorpolymers der Fluorpolymerschicht an der Grenzfläche mit dem Metallsubstrat geringer ist als die Orientierung des Fluorpolymers der Fluorpolymerschicht an der Grenzfläche mit Luft.

11. Verfahren nach Anspruch 8, wobei die Umkristallisierung unter Ruhebedingungen ausgeführt wird.

12. Verfahren nach Anspruch 8, wobei das Metallsubstrat ein elektrischer Leiter ist und die Fluorpolymerschicht die elektrische Isolierung für den Leiter ist, wobei bevorzugt die Haftung der elektrischen Isolierung an dem elektrischen Leiter durch eine Erhöhung der Abziehkraft um mindestens 50 % im Vergleich mit der Abziehkraft, die vor der Umkristallisation vorliegt, gekennzeichnet ist.

13. Verfahren nach Anspruch 8, wobei die Haftung der elektrischen Isolierung an dem elektrischen Leiter **dadurch gekennzeichnet ist, dass** das Laminat den IEEE 1018-2004-Test besteht.

14. Verfahren nach Anspruch 8, wobei das Fluorpolymer der Fluorpolymerschicht zu mindestens 50 % aus Fluor besteht.

## Revendications

1. Stratifié comprenant un substrat métallique et une couche de polymère fluoré adhérée directement audit substrat métallique, ladite couche de polymère fluoré ayant une région recristallisée en place au niveau de l'interface avec ledit substrat métallique, ledit polymère fluoré de ladite couche de polymère fluoré présentant une fonctionnalité polaire et ladite fonctionnalité polaire comprenant une fonctionnalité polaire à chaîne latérale polymère fluoré, ladite fonctionnalité polaire à chaîne latérale étant sélectionnée dans le groupe constitué du groupe amine, amide, carboxyle, hydroxyle, phosphonate, sulfonate, nitrile, boronate et époxyde.

2. Stratifié selon la revendication 1, ladite couche de polymère fluoré ayant une région non recristallisée opposée à ladite interface, préférablement l'orientation du polymère fluoré de ladite région recristallisée en place étant inférieure à l'orientation du polymère fluoré de ladite région non recristallisée.

3. Stratifié selon la revendication 1 compris dans un câble électrique, ledit substrat métallique étant un conducteur électrique et ladite couche de polymère fluoré étant l'isolation électrique entourant ledit conducteur, préférablement l'adhésion de ladite isolation électrique audit conducteur électrique étant **caractérisée par** une augmentation de la résistance de la bande d'au moins 50 % telle que comparée à la résistance de la bande existant avant la recristallisation.

4. Stratifié selon la revendication 1, ladite fonctionnalité polaire comprenant en outre une fonctionnalité polaire de groupe terminal polymère fluoré.

5. Stratifié selon la revendication 1, ledit polymère fluoré de ladite couche de polymère fluoré étant au moins du fluor à 50 % en pds.

6. Câble électrique comprenant un conducteur métallique et une isolation de polymère fluoré entourant ledit, et adhérant directement audit, conducteur métallique, ladite isolation de polymère fluoré ayant une région recristallisée à l'interface avec ledit conducteur et une région non recristallisée opposée à ladite région recristallisée, ledit polymère fluoré de ladite couche de polymère fluoré ayant une fonctionnalité polaire et ladite fonctionnalité polaire comprenant une fonctionnalité polaire à chaîne latérale polymère fluoré, ladite fonctionnalité polaire à chaîne latérale étant sélectionnée dans le groupe constitué du groupe amine, amide, carboxyle, hydroxyle, phosphonate, sulfonate, nitrile, boronate et époxyde.

7. Câble électrique selon la revendication 6, l'orientation du polymère fluoré de ladite région recristallisée étant inférieure à l'orientation du polymère fluoré de ladite région non recristallisée.

8. Procédé de formation d'un stratifié comprenant une couche de polymère fluoré adhérente sur un substrat métallique, comprenant l'application du polymère fluoré fondu directement à une surface dudit substrat métallique pour former ladite couche de polymère fluoré et la recristallisation du polymère fluoré de ladite couche de polymère fluoré à l'interface avec ledit substrat métallique sans changer la forme de ladite couche de polymère fluoré, ledit polymère fluoré de ladite couche de polymère fluoré ayant une fonctionnalité polaire et ladite fonctionnalité polaire comprenant une fonctionnalité polaire à chaîne latérale polymère fluoré, qui est sélectionnée dans le groupe constitué du groupe amine, amide, carboxyle, hydroxyle, phosphonate, sulfonate, nitrile, boronate et époxyde.

9. Procédé selon la revendication 8, ladite recristallisation étant conduite par refroidissement de ladite couche de polymère fluoré en-dessous de la température de fusion dudit polymère fluoré de ladite couche de polymère fluoré et le chauffage à nouveau dudit polymère fluoré de ladite couche de polymère fluoré au niveau de l'interface avec ledit substrat métallique jusqu'à une température supérieure à ladite température de fusion dudit polymère fluoré, suivi du refroidissement de ladite couche de polymère fluoré jusqu'à une température inférieure à ladite température de fusion dudit polymère fluoré, préférablement ledit réchauffage étant conduit par chauffage dudit substrat métallique.

10. Procédé selon la revendication 8, ladite recristallisation étant efficace pour réduire l'orientation du polymère fluoré de ladite couche de polymère fluoré à l'interface avec ledit substrat métallique, préférablement l'orientation du polymère fluoré de ladite couche de polymère fluoré à l'interface avec ledit substrat métallique étant inférieure à l'orientation du polymère fluoré de ladite couche de polymère fluoré au niveau de l'interface avec l'air.

11. Procédé selon la revendication 8, ladite recristallisation étant conduite sous des conditions de quiescence.

12. Procédé selon la revendication 8, ledit substrat métallique étant un conducteur électrique et ladite couche de polymère fluoré étant une isolation électrique pour ledit conducteur, préférablement l'adhésion de ladite isolation électrique audit conducteur électrique étant **caractérisée par** une augmentation dans la résistance de la bande d'au moins 50 % telle que comparée à la résistance de la bande existant avant ladite recristallisation.

13. Procédé selon la revendication 8,
l'adhérence de ladite isolation électrique audit conducteur électrique étant **caractérisée par** ledit stratifié réussissant le test IEEE 1018-2004.

14. Procédé selon la revendication 8, ledit polymère fluoré de ladite couche de polymère fluoré étant d'au moins 50 % de fluor en pds.
